# EUROPEAN PATENT SPECIFICATION

(11) **EP 0 660 053 B1**
(45) Date of publication and mention of the grant of the patent: **09.09.1998**
(21) Application number: 94309371.6
(22) Date of filing: 15.12.1994
(51) Int. Cl.: F25B 1/00, F28F 9/04, F28D 1/03

(54) **Method of assembling a laminated heat exchanger**
Verfahren zur Herstellung eines Lamellenwärmetauschers
Procédé d'assemblage d'un échangeur de chaleur à lamelles

(30) Priority: 24.12.1993 JP 347796/93
(43) Date of publication of application: 28.06.1995
(73) Proprietor: ZEXEL CORPORATION, Tokyo (JP)
(72) Inventor: Nishishita, Kunihiko, c/o Zexel Corporation, Konan-machi, Saitama (JP)
(74) Representative: Matthews, Howard Nicholas

(56) References cited:
- EP-A- 0 625 686
- DE-A- 4 009 780
- DE-U- 9 303 869
- US-A- 3 104 701
- US-A- 4 274 482
- US-A- 4 809 518
- US-A- 5 024 269
- US-A- 5 042 577

## Description

The present invention relates to a method of assembling a laminated heat exchanger used in an air conditioning system for a vehicle and in particular, a laminated heat exchanger that is provided with a pair of tanks formed on one side and with both the intake and outlet portions provided parallel to each other in one of the end plates.

Laminated heat exchangers of this type that have been developed by the applicant of the present invention have a structure in which the core of the laminated heat exchanger is formed by laminating a plurality of levels of tube elements, with a pipe passage formed between one group of tanks and the other group of tanks in a tube element group. A communicating pipe is provided in the pipe passage with one end of this communicating pipe connected to a tank in the tank group and the other end of the communicating pipe connected to a coolant passage which is formed outside of the end plate.

One end of the communicating pipe is inserted in the opening of the tank and the other end is inserted in the opening of the end plate in advance before assembling the communicating pipe in the core of the laminated heat exchanger and before brazing in the furnace, in order to prevent any misalignment between the connecting pipe and the opening of the tank or misalignment between the communicating pipe and the opening of the end plate. Then, the communicating pipe is mounted in the laminated heat exchanger by securing the entire laminated heat exchanger with jigs or the like and then brazing it in the furnace.

However, in the structure described above, when brazing the laminated heat exchanger in the furnace, the length of the laminated heat exchanger in the direction of lamination is reduced by 3mm - 6mm. as the solder on the surface of the tube elements melts. This may cause one end of the communicating pipe to enter into the distribution tank too far and, at the same time, cause the other end to enter too far into the coolant passage formed outside of the end plate.

We can assume that this will greatly reduce the opening area of the communicating pipe and consequently increase the coolant resistance when coolant flows into the communicating pipe from the intake / outlet pipe via the coolant passage or when the coolant flows into any tank from the communicating pipe.

The object of the present invention is to provide a method of assembling a laminated heat exchanger in which coolant can flow smoothly by reducing coolant resistance when, for example, coolant flows into the communicating pipe from the coolant passage or when coolant flows into any tank from the communicating pipe, by addressing the problem described above.

In US-A-5024269 there is shown in Figure 10 a pipe 18 having one end extending right through hole 21 and its other end extending right through end plate 16B. Accordingly the positioning of pipe 18 during manufacture is not critical, particularly because the ends of the pipe are not in close proximity to surfaces spaced from the ends of the pipe.

In US-A-4274482 there is shown in Figure 5 an evaporator with a pipe 136 one end of which is secured to a tank wall by means of a stepped outer surface. However the other end of the pipe 136 passes right through and out of the evaporator and therefore the positioning of said other end is not critical and is not shown as lying close to an end plate beyond the opening of said other end.

In EP-A-625686 there is shown in Figure 26B one end of communicating pipe 86 secured to the tank element 72d by means of a stepped surface. However the other end as shown in Figure 26A simply passes straight through end plate 74a. It is in relation to this closest prior art that the method of the present invention was developed to ensure that said other end does not extend too far into the coolant passage formed outside of the end plate.

According to the present invention there is provided a method of assembling a laminated heat exchanger comprising a heat exchanger core having a plurality of tube elements, each of which has a pair of tanks and a U-shaped coolant passage communicating between said pair of tanks, a plurality of fins laminated alternately with said tube elements and a pair of end plates, one each end of the core; first tanks of the pair adjacent in said direction of lamination being connected via communication holes to form a first tank group and second tanks likewise adjacent and connected to form a second tank group,
one of said tank groups divided by a blind tank in an approximately centre in said direction of lamination, and another of said tank groups communicating wholly from end to end of the core,
a groove formed between said tank groups, inlet/outlet coolant passages formed in one of said end plates, a fitting hole formed in one end of said one end plate,
a tank extending to the side of said groove being formed at a position in one tank group spaced from said end plate,
a communicating pipe, communicating one of said inlet/outlet coolant passages with said tank,
the other inlet/outlet coolant passage communicating with the other tank group closest to said end plate, the method comprising
securing one end of said communicating pipe to said tank,
providing a cylindrical portion with one end thereof defining said fitting hole, with the internal diameter of the cylindrical portion being such that the communicating pipe is a snug fit therein,
inserting the other end of the communicating pipe into the fitting hole so that a portion of the circumference of the free end of the communicating pipe is in contact with the cylindrical portion and,
allowing said other end of the communicating pipe to slide into or through said cylindrical portion upon displacement as a result of contraction of said core during brazing.

With this, since one end of the communicating pipe is inserted in the cylindrical portion that is extended from the fitting hole and, at the same time, the end of the communicating pipe on the tank side is secured by the means for pipe connecting when mounting the communicating pipe, the communicating pipe remains within the cylindrical portion even when the laminated heat exchanger shrinks in the direction of lamination during brazing in the furnace. Thus, the communicating pipe is prevented from entering the coolant passage.

Also, the laminated heat exchanger assembled according to the method of present invention is provided with tube elements, which are constituted of tanks and coolant passages laminated alternately with fins, with an end plate at one end and a communicating pipe that communicates between one of the tanks and the intake and outlet portions that are formed in the end plate, via an intake / outlet coolant passage that is formed at the end plate, may take a structure in which a means for securing joints is employed to join the communicating pipe to the tank to make a connection at one end of the communicating pipe and at other end, the inserted end of the communicating pipe that is inserted into the fitting hole of the end plate on the insertion side is provided with a notch or hole and is brazed in such a manner that displacement is allowed in the fitting hole.

With this structure, since one end of the communicating pipe is fitted in the pipe fitting hole and, at the same time, the end of the communicating pipe on the tank side is secured by the means for pipe connecting when mounting the communicating pipe, the opening area of the communicating pipe does not become reduced even when the communicating pipe intrudes into the coolant passage as the laminated heat exchanger shrinks in the direction of the lamination during brazing, because the coolant flows through the notch or hole in the communicating pipe as well.

In addition, the means for pipe connecting may be constituted by fitting and joining the communicating pipe to the mounting hole of the tank. Or, the means for pipe connecting may be constituted by inserting the communicating pipe in the tank mounting hole and, at the same time, forming a notch or a hole in that area on the insertion side.

With this structure, the communicating pipe is secured by being fitted in the mounting hole of the tank or by being in contact with the inner wall of the tank while the state of communication is maintained with the notch or the hole.

Many other advantages and objects of the present invention will be understood by those of ordinary skill in the art by referring to the attached drawings. which illustrate preferred embodiments of the present invention, in which:

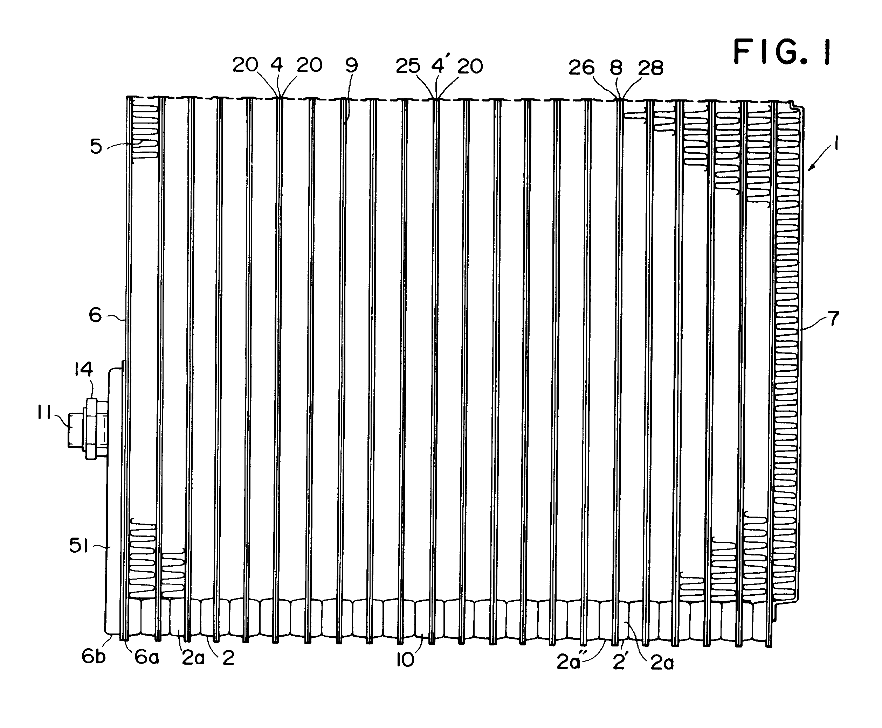

Figure 1 is a front view of the overall structure of the laminated heat exchanger assembled according to the method of the present invention;
Figure 2 is a bottom view of the overall structure of the laminated heat exchanger in Figure 1:
Figure 3 shows the structure of the formed plate used in a typical tube element of the tube elements that constitute a laminated heat exchanger as in Figure 1;
Figure 4 shows the structure of the formed plate used in a tube element that is provided with a blind tank of the tube elements that constitute a laminated heat exchanger as in Figure 1;
Figure 5 shows the structure of one of the formed plates used in a tube element that is provided with a tank that links with the communicating pipe of the tube elements that constitute a laminated heat exchanger as in Figure 1;
Figure 6 shows the structure of the other formed plate used in a tube element that is provided with a tank that links with the communicating pipe of the tube elements that constitute a laminated heat exchanger as in Figure 1;
Figures 7A and 7B show the means for connection constituted with the communicating pipe and the cylindrical portion that extends from the fitting hole in the end plate;
Figure 8 shows the means for mounting constituted with the mounting hole formed in the tank and the communicating pipe that is provided with a front end portion that can be fitted in this mounting hole;
Figures 9 - 11 show other embodiments of the means for connection;
Figures 12 - 14 show other embodiments of the means for mounting;

The following is an explanation of the embodiments of a heat exchanger assembled according to the present invention in reference to the drawings.

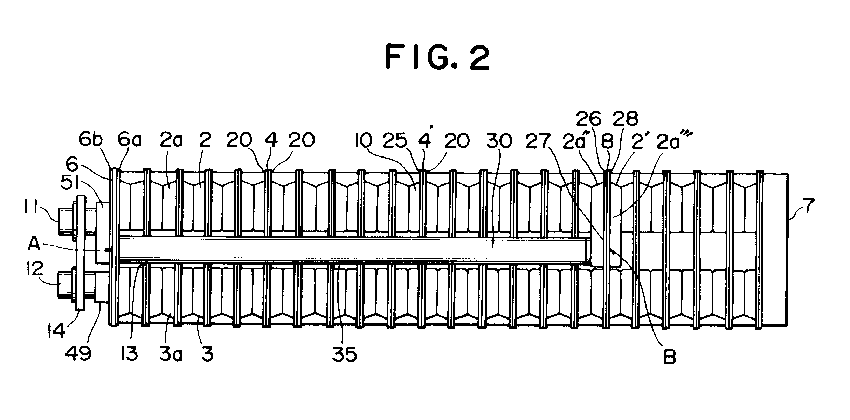

In Figure 2, the laminated heat exchanger 1 is provided with tank groups 2. 3 on one side thereof and a group of U-shaped passages 9 in the remaining area thereof and is structured by laminating the tube elements 4 alternately with the corrugated fins 5 over a plurality of levels (20 levels, for instance), in which the core of the heat exchanger is formed by providing the tube element 4' at the approximate center between the laminated tube elements 4, and providing the tube elements 8 toward the right in the figure from the tube element 4' at the approximate center, and by providing the end plates 6, 7 at both ends in the direction of lamination. The intake / outlet portions 11, 12 are provided in the end plate 6 on the side opposite the tube elements and, at the same time. an expansion valve (not shown) is mounted and the mounting plate 14 is provided. The details of the structure of the installation to the end plate 6 are given later.

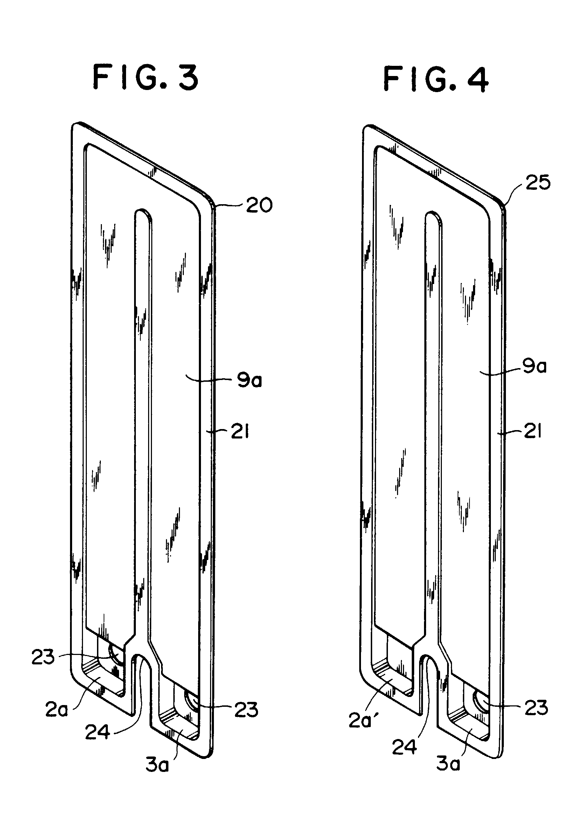

In this laminated heat exchanger 1, of the tanks in the tank groups 2, 3 that are in contact with each other, those that lie adjacent to each other communicate via the communicating holes 23, 23 shown in Figures 3 - 6. It is structured as a heat exchanger with a 4-path coolant flow (since this is of the known art, explanation of this structure is omitted) with a blind tank 10 that does not have a communicating hole and which is provided at the approximate center in the direction of lamination of the laminated heat exchanger.

While all the tube elements 4, 4' and 8 are formed in an approximately rectangular shape, the tube elements 4 are structured by placing the brazing margins 21, 21 of the two formed plates 20, 20 shown in Figure 3 flush to each other.

The formed plates 20, which constitute the tube elements 4, as shown in Figure 3, are made of aluminum and each of them has a sheet applied with solder on its surface and is provided with an indented portion 9a, the upper portion of which forms the U-shaped passage group 9. At its lower end, a pair of distended portions for tank formation 2a, 3a are formed with communicating holes 23, 23 bored at one end in the direction of the length. The cleft portion 24 is formed between the distended portions for tank formation 2a, 3a.

By butting pairs of formed plates 20 flush to each other, the tube elements 4 are structured and at the lower end of these, a pair of tank groups 2, 3 are structured with the distended portions for tank formation 2a, 3a that face opposite each other and between the tank group 2 and the tank group 3, the indented portion 13, constituted of the cleft portions 24, is provided.

As for the tube element 4', which is provided in such a manner that it is positioned near the center of the laminated heat exchanger 1 in the direction of lamination, it is structured by joining the formed plate 20, shown in Figure 3, flush with the formed plate 25, shown in Figure 4, which is provided with the distended portion for tank formation 2a' that has no communicating hole 23 bored on one side. Joining these formed plates in this manner provides the tube element 4' with a blind tank 10.

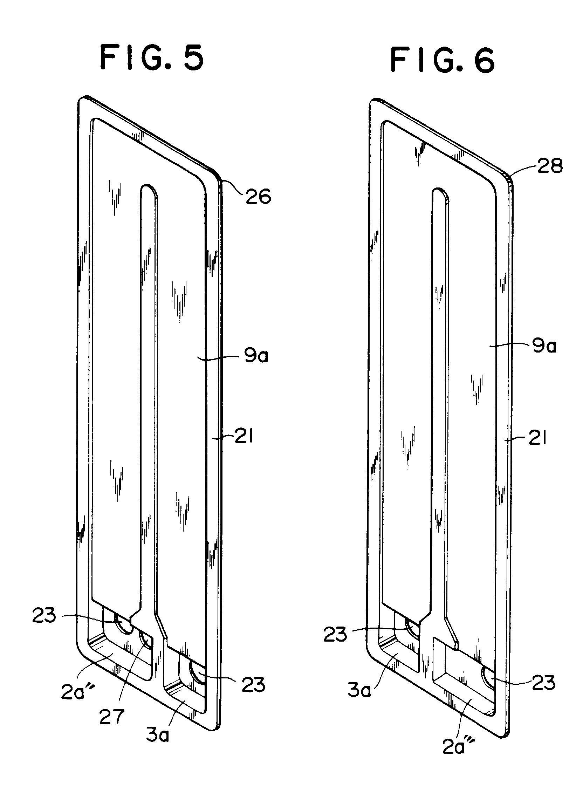

The tube element 8 is provided toward the right from the tube element 4' in the drawing, and it is structured by joining the formed plate 26, shown in Figure 5, flush with the formed plate 28, shown in Figure 6.

The formed plate 26 has a basic form identical to that of the formed plate 20 except that it does not have the cleft portion 24 formed between the distended portion for tank formation 2a and the distended portion for tank formation 3a. Instead, a distended portion for tank formation 2a'' is provided, extending as an approximately elliptical shape into that area, with a communicating hole 23 and a mounting hole 27 for mounting a communicating pipe 30 (to be explained later). The other formed plate 28, too, has a basic form identical to that of the formed plate 20 except that it does not have the cleft portion 24. Instead, a distended portion for tank formation 2a''' is provided, extending as an approximately elliptical shape into that area, with a communicating hole 23.

By butting the formed plate 26 and the formed plate 28 flush in this manner, the tube element 8 is formed, and on its lower end side, the tank group 3 is formed with the distended portions for tank formation 3a that face opposite each other and, at the same time, the tank 2' is structured with the distended portion for tank formation 2a'' of the formed plate 26 and the distended portion for tank formation 2a"' of the formed plate 28. Note that the mounting hole 27 of the tank 2' opens toward a passage 35, which is to be explained later.

The end plate 6 is constituted with the flat plate 6a and a passage forming plate 6b. The flat plate 6a blocks off the formed plate 20 that is located at the end and, at the same time, is provided with a pipe fitting hole 50, into which the communicating pipe 30 is fitted, a coolant distribution hole (not shown) which opens into the distended portion for tank formation 3a of the formed plate 20 and an intake/outlet hole (not shown), to which the intake / outlet portion 12 is mounted. Also, note that the passage forming plate 6b is provided with an intake / outlet hole (not shown) into which the intake / outlet portion 11 is fitted. Then, by joining the flat plate 6a and the passage forming plate 6b, the coolant distribution passage 49 and the intake / outlet coolant passage 51 are formed.

With the core of the heat exchanger structured by laminating the tube elements 4, 4' and 8 alternately with the fins 5 over a plurality of levels, and with the end plates 6, 7 provided at both ends, the passage 35, which extends in the direction of the lamination is formed by the communicating pipe 30 between the tank group 2 and the tank group 3.

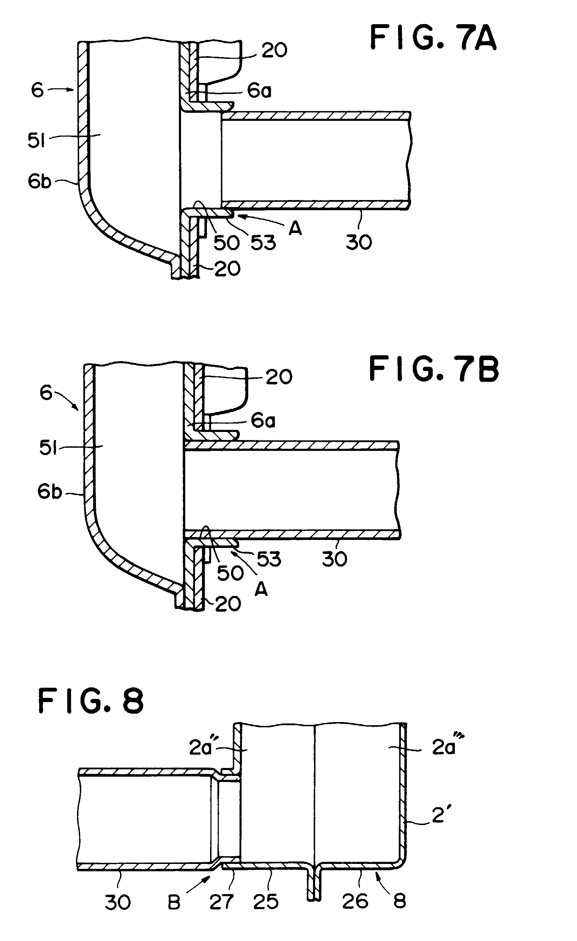

Next, the details of the means for connection A for connecting the communicating pipe 30 to the end plate 6 and the means for securing B, for securing the communicating pipe 30 to the mounting hole 27 of the tank 2' are explained in reference to Figures 7A, 7B and 8.

The means for connection A is constituted by providing a cylindrical portion 53 whose internal diameter is such that the communicating pipe 30 can be inserted snugly into the internal diameter of the of the pipe inserting hole 50 of the end plate 6a extending toward the passage 35. As the means for securing B, the communicating pipe is stepped, i.e., the external diameter is reduced, so that the end portion of the communicating pipe 30 on the tank 2' side can be secured by inserting it into the mounting hole of the tank 2'.

In the structure described above, when assembling the laminated heat exchanger 1, the end of the communicating pipe 30 on the end plate 6 side is only slightly inserted in the opening of the cylindrical portion 53 as shown in Figure 7A and, at the same time, the end of the communicating pipe 30 on the tank 2' side is secured in the mounting hole 27 of the tank 2'.

With this, even when the laminated heat exchanger 1 contracts in the direction of the lamination during brazing in the furnace, the end of the communicating pipe 30 on the tank 2' side does not move further into the tank 2'. At the same time, although the end of the communicating pipe 30 at the end plate 6 side moves toward the intake / outlet coolant passage 51, it does not project out into the intake / outlet coolant passage 51 any further than the base portion of the cylindrical portion 53, as shown in Figure 7B. As a result, the coolant that flows from the intake / outlet portion 11 to the tank 2' via the intake / outlet coolant passage 51 and the communicating pipe 30 can flow smoothly without being hindered by the side surface of the communicating pipe 30, avoiding an increase in coolant resistance.

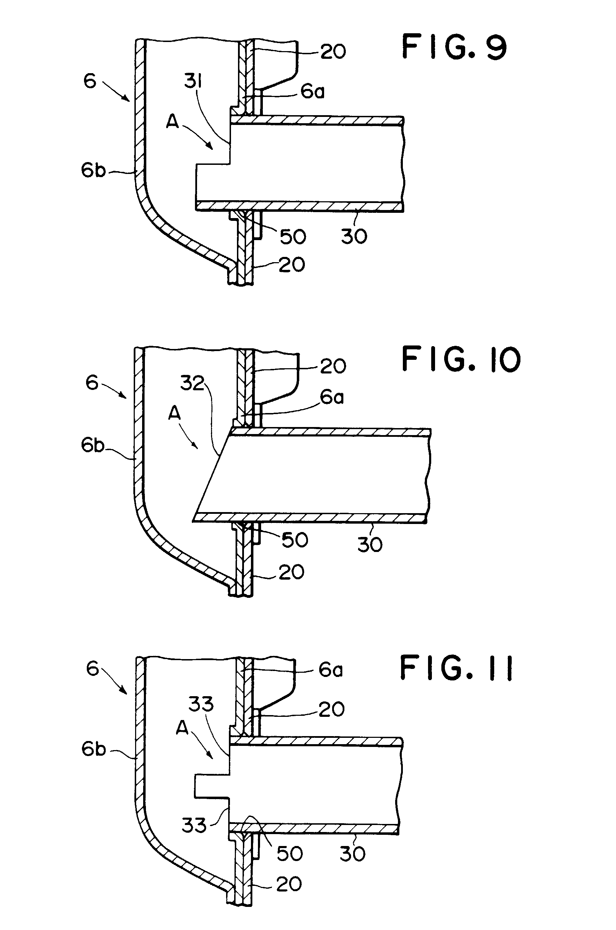

Note that the form of the means for connection is not limited to the structure shown in Figure 7A, 7B and as shown in Figure 9, for example, instead of the cylindrical portion 53 extending toward the passage 35 from the pipe fitting hole 50 formed in the end plate 6a, a straight notch 31 may be formed at the end of the communicating pipe 30, or, instead of the straight notch 31, a diagonal notch 32 may be formed in the communicating pipe 30, as shown in Figure 10. Furthermore, instead of the notch 31 or 32, a hole may be provided on the side surface of the communicating pipe 30.

With the structure described above, when assembling the laminated heat exchanger 1, with the un-notched area at the end of the communicating pipe 30 placed in contact with the fitting hole 50 in such a manner that the notch 31 or 32 will face toward the intake / outlet portion 11, coolant flows in through the opening at the end and the notch 31 or 32 of the communicating pipe 30 even when the laminated heat exchanger 1 contracts in the direction of lamination and the communicating pipe 30 projects out into the intake / outlet coolant passage 51. Consequently, an increase in the coolant resistance can be reduced.

In addition, as shown in Figure 11, the means for connection A may be provided with two notches 33, 33 formed in the communicating pipe 30 facing opposite each other. With this structure, it is possible to fit the communicating pipe 30 into the fitting hole 50 without worrying about the positions of the notches 33, 33.

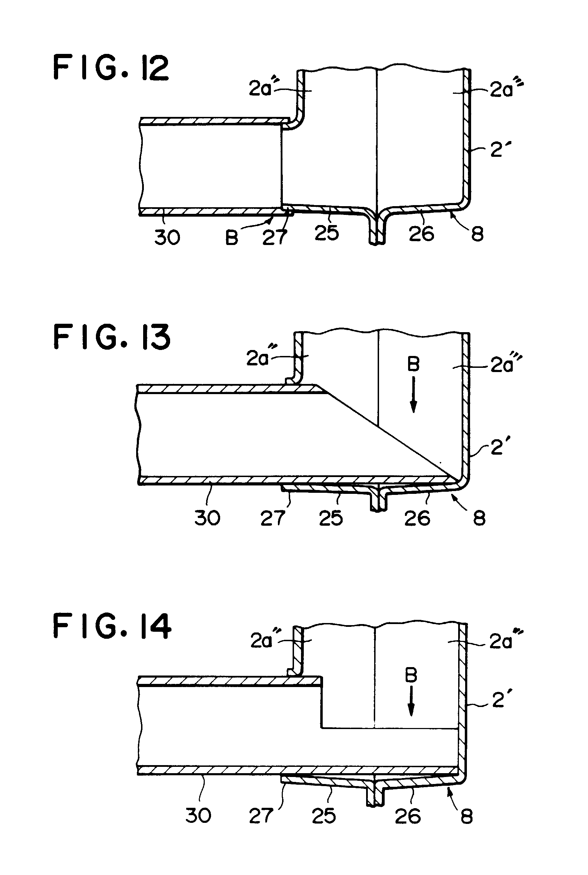

At the same time, the structure of the means for securing B is also not limited to the one shown in Figure 8. Instead, it may take the structure shown in Figure 12, in which the internal diameter of the communicating pipe 30 at the end on the tank 2' side is such that the end can be externally fitted onto the external diameter of the mounting hole 27. This structure, too, ensures that the communicating pipe 30 is secured to the mounting hole 27.

Furthermore, the structure of the means for securing B is not limited to the structure in which the communicating pipe 30 is fitted in the mounting hole 27 of the tank 2'. As shown in Figure 13, when assembling the laminated heat exchanger 1, the length of the communicating pipe 30 may be set at the length over which the communicating pipe 30 is in contact with the inner wall of the tank group 2', with a notch 34 formed diagonally at the front end of the communicating pipe 30. In this case, note that it is necessary to turn the notch 34 toward the upper end of the tube element 8 when mounting the communicating pipe 30.

With this structure, since the communicating pipe 30 is in contact with the inner wall of the tank 2', even when the laminated heat exchanger 1 contracts in the direction of the lamination during brazing in the furnace, the end of the communicating pipe 30 on the tank 2' side does not move and, moreover, coolant flows even more smoothly through the opening at the end and the notch 34 of the communicating pipe 30 because of the notch 34. As a result, an increase in coolant resistance is avoided.

Also, the means for securing B may take the structure shown in Figure 14, in which the length of the communicating pipe 30 may be set at the length over which the communicating pipe 30 is in contact with the inner wall of the tank group 2' when assembling the laminated heat exchanger 1 and by forming a rectilinear notch 34 at the front end of the communicating pipe 30. With this structure, since the surface over which the communicating pipe 30 is in contact with the inner wall of the tank 2' is increased, the communicating pipe 30 is secured more reliably.

Lastly, the combination of various forms of the means for connection A, shown in Figure 7A, 7B and 9 - 11, and the various forms of the means for securing B, shown in Figure 8 and 12 - 14, is not limited to any specific combination.

As has been explained, with the heat exchanger that is structured as shown in Figure 7A, 7B, the end of the communicating pipe 30 stays at the cylindrical portion and does not intrude into the coolant passage even when the laminated heat exchanger contracts in the direction of lamination during brazing in the furnace, since the end of the communicating pipe on the fitting hole side is fitted in the cylindrical portion that extends from the fitting hole and the end of the communicating pipe on the tank side is secured by the means for pipe securing when mounting the communicating pipe. As a result, the opening area of the communicating pipe does not become reduced and an increase in coolant resistance is avoided.

Also, with the heat exchanger that is structured as shown in Figures 9 - 11, the coolant is distributed through the notch or the hole in the communicating pipe even when the communicating pipe enters into the coolant passage with the contraction of the laminated heat exchanger in the direction of the lamination during brazing in the furnace, since the end of the communicating pipe on the fitting hole side is fitted in the fitting hole and the end of the communicating pipe on the tank side is secured by the means for pipe securing. As a result, the opening area of the communicating pipe does not become reduced and an increase in coolant resistance is avoided.

Furthermore, if a fitting structure such as that shown in Figure 8 or 12 is provided, the communicating pipe is secured by being fitted into the mounting hole of the tank, thereby simplifying the securing method. Also, if a structure such as that shown in Figure 13 or 14 is provided, the end of the communicating pipe on the tank side is secured in contact with the inner wall of the tank and, at the same time, the flow of coolant is ensured. As a result, the opening area of the communicating pipe does not become reduced and an increase in coolant resistance is avoided.

## Claims

1. A method of assembling a laminated heat exchanger comprising a heat exchanger core having a plurality of tube elements (4,4',8), each of which has a pair of tanks and a U-shaped coolant passage communicating between said pair of tanks, a plurality of fins (5) laminated alternately with said tube elements (4,4',8) and a pair of end plates (6,7), one each end of the core; first tanks of the pair adjacent in said direction of lamination being connected via communication holes (23) to form a first tank group (2) and second tanks likewise adjacent and connected to form a second tank group (3),
one of said tank groups (2) divided by a blind tank (10) in an approximately centre in said direction of lamination, and another of said tank groups (3) communicating wholly from end to end of the core,
a groove (13) formed between said tank groups (2,3), inlet/outlet coolant passages (49,51) formed in one of said end plates (6), a fitting hole (50) formed in one end of said one end plate (6),
a tank (2') extending to the side of said groove (13) being formed at a position in one tank group (2) spaced from said end plate (6),
a communicating pipe (30), communicating one of said inlet/outlet coolant passages (49) with said tank (2'),
the other inlet/outlet coolant passage (51) communicating with the other tank group (2) closest to said end plate (6), the method comprising
securing one end of said communicating pipe (30) to said tank (2'),
providing a cylindrical portion (53) with one end thereof defining said fitting hole (50), with the internal diameter of the cylindrical portion (53) being such that the communicating pipe (30) is a snug fit therein,
inserting the other end of the communicating pipe (30) into the fitting hole (50) so that a portion of the periphery of the free end of the communicating pipe (30) is touching the cylindrical portion (53) and, allowing said other end of the communicating pipe to slide into or through said cylindrical portion (53) upon displacement as a result of contraction of said core during brazing.

2. A method according to claim 1, characterised in that said other end is first partially inserted into said cylindrical portion and protrudes further into said cylindrical portion after displacement.

3. A method according to claim 1, characterised in that said other end is first inserted into the fitting hole (50) and extends through the fitting hole after brazing and wherein said other end of said communicating pipe (30) has a portion missing in the direction of coolant flow.

4. A method according to claim 3, wherein said portion missing is formed by the periphery of said other end of said communicating pipe (30) being cut in a specific area so as to enlarge an opening segment in said direction of coolant flow.

5. A method according to claim 3, wherein said portion missing is formed by said other end of said communicating pipe being cut aslant to enlarge an opening face in said direction of coolant flow.

6. A method according to claim 3, wherein said portion missing is formed in both sides of the communicating pipe in said direction of coolant flow.

7. A method according to any one of claims 1 to 6, wherein said securing is effected by an engaging connection between one end of said communicating pipe (30) and a mounting hole (27) formed in said tank (2').

8. A method according to any one of claims 1 to 6, wherein said securing is effected by the diameter of said one end of said communicating pipe (30) being reduced, said reduced portion being inserted into said mounting hole (27) in said tank (2') to connect said communicating pipe (30) and said tank (2').

9. A method according to any one of claims 1 to 6, wherein said securing is effected by the periphery of said mounting hole (27) being projected externally, said communicating pipe (30) being externally engaged with a projecting portion of said periphery of said mounting hole (27) to connect said communicating pipe (30) and said tank (2').

10. A method according to any one of claims 1 to 6, wherein said securing is effected by an end of said communicating pipe (30) inserted into said mounting hole (27) formed in said tank (2') being cut aslant to enlarge an opening section in said direction of coolant flow, said end portion which is cut being inserted into said mounting hole (27) in said tank (2'), and said end portion being contacted at a wall of said tank (2') which is opposite to said mounting hole (27) to secure said communicating pipe (30) to said tank (2').

11. A method according to any one of claims 1 to 6, wherein said securing is effected by an end of said communicating pipe (30) inserted into said mounting hole (27) formed in said tank (2') being cut so that a cutting surface with a specific length in an axis direction of said communicating pipe (30) is formed, said end portion which is cut being inserted into said mounting hole (27) of said tank (2') and contacted at a wall of said tank (2') which is opposite to said mounting hole (27) to secure said communicating pipe (30) to said tank (2').

## Patentansprüche

1. Verfahren zum Zusammenbau eines geschichteten Wärmeaustauschers, der einen Wärmeaustauscherkern mit einer Vielzahl von Röhrenelementen (4, 4', 8), von denen jedes ein Paar von Reservoirs und einen U-förmigen Kühlmitteldurchgang aufweist, der mit dem Paar von Reservoirs dazwischen in Verbindung steht, einer Vielzahl von mit den Röhrenelementen (4, 4', 8) abwechselnd geschichteten Rippen (5) und einem Paar Endplatten (6, 7), jeweils einer an jedem Ende des Kerns, wobei erste Reservoirs des Paars, die in der Schichtrichtung benachbart sind, über Verbindungslöcher (23) miteinander verbunden sind, um eine erste Reservoirgruppe (2) zu bilden, und zweite Reservoirs ebenfalls benachbart und verbunden sind, um eine zweite Reservoirgruppe (3) zu bilden,
wobei eine der Reservoirgruppen (2) durch ein Blindreservoir (10) in der Schichtrichtung etwa in der Mitte unterteilt ist, und eine andere der Reservoirgruppen (3) von Ende zu Ende des Kerns völlig in Verbindung steht,
eine Nut (13), die zwischen den Reservoirgruppen (2, 3) ausgebildet ist, Einlaß/Auslaß-Durchgänge (49, 51) für das Kühlmittel, die in einer der Endplatten (6) ausgebildet sind, ein Montageloch (50), das in einem Ende der einen Endplatte (6) ausgebildet ist,
ein Reservoir (2'), das sich zur Seite der Nut (13) erstreckt, die an einer Stelle in einer Reservoirgruppe (2) ausgebildet ist, die einen Abstand zur einen Endplatte (6) hat,
ein Verbindungsrohr (30), das einen der Einlaß/AuslaßDurchgänge (49) für das Kühlmittel mit dem Reservoir (2') verbindet, umfaßt,
wobei der andere Einlaß/Auslaß-Durchgang (51) mit der anderen Reservoirgruppe (2) in Verbindung steht, die der Endplatte (6) am nächsten ist, wobei das Verfahren umfaßt
das Befestigen eines Endes des Verbindungsrohrs (30) an dem Reservoir (2'),
das Bereitstellen eines zylindrischen Abschnitts (53), wobei sein eines Ende das Montageloch (50) definiert,
wobei der Innendurchmesser des zylindrischen Abschnitts (53) derart ist, daß das Verbindungsrohr (30) im Paßsitz darin eingepaßt ist,
das Einfügen des anderen Endes des Verbindungsrohrs (30) in das Montageloch (50), so daß ein Abschnitt des Umfangs des freien Endes des Verbindungsrohrs (30) den Zylinderabschnitt (53) berührt, und wobei gestattet wird, daß das andere Ende des Verbindungsrohrs bei Verschiebung als Folge eines Zusammenziehens des Kerns während des Hartlötens in oder durch den zylindrischen Abschnitt (53) gleitet.

2. Verfahren nach Anspruch 1, dadurch gekennzeichnet, daß das andere Ende erst teilweise in den zylindrischen Abschnitt eingefügt wird und nach einer Verschiebung weiter in den zylindrischen Abschnitt vorsteht.

3. Verfahren nach Anspruch 1, dadurch gekennzeichnet, daß das andere Ende erst in das Montageloch (50) eingefügt wird und sich nach dem Hartlöten durch das Montageloch erstreckt, und wobei am anderen Ende des Verbindungsrohrs (30) in Richtung des Kühlmittelflusses ein Abschnitt fehlt.

4. Verfahren nach Anspruch 3, bei dem der fehlende Abschnitt ausgebildet wird, indem der Umfang des anderen Endes des Verbindungsrohrs (30) in einem speziellen Bereich ausgeschnitten wird, um ein Öffnungssegment in der Richtung des Kühlmittelflusses zu vergrößern.

5. Verfahren nach Anspruch 3, bei dem der fehlende Abschnitt ausgebildet wird, indem das andere Ende des Verbindungsrohrs schräg abgeschnitten wird, um eine Öffnungsfläche in der Richtung des Kühlmittelflusses zu vergrößern.

6. Verfahren nach Anspruch 3, bei dem der fehlende Abschnitt in beiden Seiten des Verbindungsrohrs in der Richtung des Kühlmittelflusses ausgebildet wird.

7. Verfahren nach einem der Ansprüche 1 bis 6, bei dem das Befestigen durch eine Eingriffsverbindung zwischen einem Ende des Verbindungsrohrs (30) und einem im Reservoir (2') ausgebildeten Montageloch (27) bewirkt wird.

8. Verfahren nach einem der Ansprüche 1 bis 6, bei dem das Befestigen bewirkt wird, indem der Durchmesser des einen Endes des Verbindungsrohrs (30) verringert wird, wobei der verringerte Abschnitt in das Montageloch (27) in dem Reservoir (2') eingefügt wird, um das Verbindungsrohr (30) mit dem Reservoir (2') zu verbinden.

9. Verfahren nach einem der Ansprüche 1 bis 6, bei dem das Befestigen bewirkt wird, indem der Umfang des Montagelochs (27) nach außen hervorragt, wobei das Verbindungsrohr (30) außen mit einem vorstehenden Abschnitt des Umfangs des Montagelochs (27) zur Verbindung des Verbindungsrohrs (30) und des Reservoirs (2') in Eingriff gebracht wird.

10. Verfahren nach einem der Ansprüche 1 bis 6, bei dem das Befestigen bewirkt wird, indem ein Ende des Verbindungsrohrs (30) in das in dem Reservoir (2') ausgebildete Montageloch (27) eingefügt wird, schräg abgeschnitten wird, um einen Öffnungsquerschnitt in der Richtung des Kühlmittelflusses zu vergrößern, wobei der Endabschnitt, der abgeschnitten ist, in das Montageloch (27) in dem Reservoir (2') eingefügt wird und der Endabschnitt mit einer Wand des Reservoirs (2'), die dem Montageloch (27) gegenüberliegt, in Kontakt gebracht wird, um das Verbindungsrohr (30) an dem Reservoir (2') zu befestigen.

11. Verfahren nach einem der Ansprüche 1 bis 6, bei dem das Befestigen bewirkt wird, indem ein Ende des Verbindungsrohrs (30), das in das in dem Reservoir (2') ausgebildete Montageloch (27) eingefügt wird, so abgeschnitten wird, daß eine Schnittfläche mit einer speziellen Länge in Achsrichtung des Verbindungsrohres (30) ausgebildet wird, wobei der Endabschnitt, der ausgeschnitten wird, in das Montageloch (27) des Reservoirs (2') eingefügt und mit einer Wand des Reservoirs (2'), die dem Montageloch (27) gegenüberliegt, in Kontakt gebracht wird, um das Verbindungsrohr (30) am Reservoir (2') zu befestigen.

## Revendications

1. Procédé de montage d'un échangeur de chaleur stratifié comprenant un coeur d'échangeur de chaleur comportant plusieurs éléments tubulaires (4, 4', 8) dont chacun possède une paire de réservoirs et un passage d'agent de refroidissement en forme de U qui établit une communication entre les réservoirs de ladite paire, plusieurs ailettes (5) formant des couches alternées avec lesdits éléments tubulaires (4, 4', 8) et deux plaques d'extrémité (6, 7) respectivement disposées à chaque extrémité du coeur; des premiers réservoirs des paires adjacents dans le sens de la stratification étant reliés par l'intermédiaire de trous de communication (23) pour former un premier groupe de réservoirs (2), tandis que des seconds réservoirs sont également adjacents et reliés pour former un second groupe de réservoirs (3),
le premier groupe de réservoirs (2) étant divisé par un réservoir aveugle (10) situé approximativement au centre dans ledit sens de la stratification, tandis que le second groupe de réservoirs (3) communique complètement d'un bout à l'autre du coeur,
une rainure (13) formée entre lesdits groupes de réservoirs (2, 3), des passages d'entrée/sortie d'agent de refroidissement (49, 51) formés dans l'une (6) desdits plaques d'extrémité, un trou de raccordement (50) formé dans l'une des extrémités de ladite plaque d'extrémité (6),
un réservoir (2') s'étendant latéralement par rapport à ladite rainure (13) étant formé au niveau d'une position du premier groupe de réservoirs (2) située à une certaine distance de ladite plaque d'extrémité (6),
un tuyau de communication (30) établissant une communication entre l'un (49) desdits passages d'entrée/sortie d'agent de refroidissement et ledit réservoir (2'),
l'autre passage d'entrée/sortie d'agent de refroidissement (51) communiquant avec la partie du groupe de réservoir (2) la plus proche de ladite plaque d'extrémité (6), le procédé comprenant les étapes qui consistent à :
assujettir une première extrémité dudit tuyau de communication (30) audit réservoir (2'),
prévoir une partie cylindrique (53) dont l'une des extrémités définit ledit trou de raccordement (50), le diamètre intérieur de la partie cylindrique (53) étant tel que le tuyau de communication (30) y est emboîté suivant un ajustement à frottement doux,
insérer la seconde extrémité du tuyau de communication (30) dans le trou de raccordement (50) afin qu'une partie de la périphérie de l'extrémité libre du tuyau de communication (30) soit en contact avec la partie cylindrique (53), et permettre à ladite seconde extrémité du tuyau de communication de coulisser dans ou à travers ladite partie cylindrique (53) lors d'un déplacement résultant d'un contraction dudit coeur pendant un brasage.

2. Procédé selon la revendication 1, caractérisé en ce que ladite seconde extrémité est d'abord insérée partiellement dans ladite partie cylindrique et s'avance d'avantage dans celle-ci après déplacement.

3. Procédé selon la revendication 1, caractérisé en ce que ladite seconde extrémité est d'abord insérée dans le trou de raccordement (50) et s'étend à travers celui-ci après brasage, et suivant lequel ladite seconde extrémité dudit tuyau de communication (30) comporte une partie manquante dans le sens de l'écoulement de l'agent de refroidissement.

4. Procédé selon la revendication 3, suivant lequel ladite partie manquante est formée par une coupe de la périphérie de ladite seconde extrémité dudit tuyau de communication (30), réalisée dans une zone spécifique de manière à agrandir un segment d'ouverture dans ledit sens de l'écoulement de l'agent de refroidissement.

5. Procédé selon la revendication 3, suivant lequel ladite partie manquante est formée par une coupe en biais de ladite seconde extrémité dudit tuyau de communication afin d'agrandir une face d'ouverture dans ledit sens de l'écoulement de l'agent de refroidissement.

6. Procédé selon la revendication 3, suivant lequel ladite partie manquante est formée des deux côtés du tuyau de communication dans ledit sens de l'écoulement de l'agent de refroidissement.

7. Procédé selon l'une quelconque des revendications 1 à 6, suivant lequel ledit assujettissement est réalisé par une jonction d'accouplement entre une première extrémité dudit tuyau de communication (30) et un trou de montage (27) formé dans ledit réservoir (2').

8. Procédé selon l'une quelconque des revendications 1 à 6, suivant lequel ledit assujettissement est réalisé par une réduction du diamètre de ladite première extrémité dudit tuyau de communication (30), ladite partie réduite étant insérée dans ledit trou de montage (27) dudit réservoir (2') pour relier ledit tuyau de communication (30) et ledit réservoir (2').

9. Procédé selon l'une quelconque des revendications 1 à 6, suivant lequel ledit assujettissement est réalisé par une projection extérieure de la périphérie dudit trou de montage (27), ledit tuyau de communication (30) étant accouplé extérieurement avec une partie saillante de ladite périphérie dudit trou de montage (27) pour relier ledit tuyau de communication (30) et ledit réservoir (2').

10. Procédé selon l'une quelconque des revendications 1 à 6, suivant lequel ledit assujettissement est réalisé par une coupe en biais d'une extrémité dudit tuyau de communication (30) insérée dans ledit trou de montage (27) formé dans ledit réservoir (2') pour agrandir une section d'ouverture dans ledit sens de l'écoulement de l'agent de refroidissement, ladite partie d'extrémité coupée étant insérée dans ledit trou de montage (27) dudit réservoir (2') et mise en contact avec une paroi dudit réservoir (2') située en face dudit trou de montage (27) pour assujettir ledit tuyau de communication (30) audit réservoir (2').

11. Procédé selon l'une quelconque des revendications 1 à 6, suivant lequel ledit assujettissement est réalisé par une coupe d'une extrémité dudit tuyau de communication (30) insérée dans ledit trou de montage (27) formé dans ledit réservoir (2'), de façon à former une surface de coupe ayant une longueur spécifique dans une direction axiale dudit tuyau de communication (30), ladite partie d'extrémité coupée étant insérée dans ledit trou de montage (27) dudit réservoir (2') et mise en contact avec une paroi dudit réservoir (2') située en face dudit trou de montage (27) pour assujettir ledit tuyau de communication (30) audit réservoir (2').
